Europäisches Patentamt

European Patent Office

Office européen des brevets

(19)

(11) Veröffentlichungsnummer : **0 174 036**
**B1**

(12) # EUROPÄISCHE PATENTSCHRIFT

(45) Veröffentlichungstag der Patentschrift :
25.05.88

(51) Int. Cl.⁴ : **B 01 D 53/36, C 10 K 1/32**

(21) Anmeldenummer : 85200874.7

(22) Anmeldetag : 04.06.85

(54) Verfahren zum Entfernen von Stickstoffoxiden und zum gemeinsamen Entfernen von Stickstoffoxiden und Schwefeloxiden aus Gasen.

(30) Priorität : 20.07.84 DE 3426913

(43) Veröffentlichungstag der Anmeldung :
12.03.86 Patentblatt 86/11

(45) Bekanntmachung des Hinweises auf die Patenterteilung : 25.05.88 Patentblatt 88/21

(84) Benannte Vertragsstaaten :
BE DE FR IT NL

(56) Entgegenhaltungen :
DE-A- 3 101 053
FR-A- 973 471
GB-A- 1 162 189

(73) Patentinhaber : LABORATORIUM FÜR ADSORP-
TIONSTECHNIK GMBH
Reuterweg 14
D-6000 Frankfurt am Main (DE)

(72) Erfinder : Storp, Klaus, Dr.
Fritz-Schubert-Ring 46
D-6000 Frankfurt am Main (DE)
Erfinder : Wirth, Johann, Dr.
Eifelweg 7
D-6868 Bad Vilbel (DE)

(74) Vertreter : Rieger, Harald, Dr.
Reuterweg 14
D-6000 Frankfurt am Main (DE)

# 0 174 036

## Beschreibung

Die Erfindung betrifft ein Verfahren zum Entfernen von Stickoxiden (NO$_x$) oder zum gleichzeitigen Entfernen von Stickoxiden und Schwefeloxiden (SO$_2$ und SO$_3$) aus Sauerstoff und Wasserdampf enthaltendem Gas.

Für die Entfernung von Stickoxiden oder Schwefeloxiden aus Gasen sind zahlreiche Verfahren bekannt. Beim Verfahren der US-A-4 117 081 entfernt man die Stickoxide dadurch, daß man dem Gas als Reduktionsmittel Kohlenmonoxid oder Wasserstoff zugibt und das Gasgemisch bei hohen Temperaturen im Bereich von 300 bis 450 °C an einem Katalysator umsetzt. Als Katalysator dienen Kupfer, Rhodium und unter anderem auch Kalium, Barium oder Magnesium auf einem Aluminiumoxid-Träger. Beim Verfahren der DE-A-30 08 306 wird dem Stickoxid enthaltenden Gas Ammoniak als Reduktionsmittel zugegeben, wobei die Umsetzung ebenfalls auf einem mit Schwermetallen imprägnierten Aluminiumoxid-Träger erfolgt.

Aus der DE-C-19 66 711 und der DE-A-19 45 090 ist die Entfernung von Schwefeldioxid und Schwefeltrioxid aus Sauerstoff und Wasserdampf enthaltendem Rauchgas bekannt. Man leitet das Rauchgas in einer Adsorptionszone über regenerierbare Aktivkohle, auf der die Schwefeloxide als Schwefelsäure abgeschieden werden, und regeneriert die beladene Aktivkohle mit schwefelhaltigem Reduktionsgas (H$_2$S und/oder CS$_2$ und/oder COS). Dabei entsteht gasförmiges SO$_2$, welches ausgespült und einer Weiterverarbeitung zugeführt wird.

Der Erfindung liegt die Aufgabe zugrunde, auf einfache Weise Stickoxide aus Gasen, insbesondere Rauchgasen, zu entfernen. Eine weitere Aufgabe besteht darin, gemeinsam mit der Entfernung von Stickoxiden aus dem zu behandelnden Gas auch Schwefeloxide abzuscheiden und daraus elementaren Schwefel herzustellen.

Die Abscheidung der Stickoxide erfolgt erfindungsgemäß dadurch, daß man das Gas mit Temperaturen von 40 bis 120 °C über einen im wesentlichen aus aktivem Aluminiumoxid bestehenden Katalysator leitet. Das beladene Aluminiumoxid wird zur Regeneration mit einem Reduktionsgas zum Entfernen adsorbierter Stickstoffverbindungen bei Temperaturen von 100 bis 300 °C behandelt und ggf. gebildeter Schwefel bei Temperaturen von 300 bis 500 °C mindestens teilweise desorbiert. Überraschend hat sich nämlich gezeigt, daß aktives Aluminiumoxid unter den genannten Bedingungen Stickoxide zu binden in der Lage ist, wobei auch Schwefeloxide und insbesondere SO$_2$ teilweise adsorbiert werden. Bevorzugt erfolgt die Abscheidung der Stickoxide bei 40 bis 80 °C und bei einer relativen Wasserdampfsättigung des Gases von 35 bis 90 %. Die Regenerierung des mit Stickstoffverbindungen beladenen aktiven Aluminiumoxids führt man vorzugsweise mit schwefelhaltigem Reduktionsgas, nämlich H$_2$S, CS$_2$ oder COS, sowie Gemischen dieser Gase durch. Bei der Umsetzung der Beladung mit dem Reduktionsgas entsteht Elementarschwefel, der in an sich bekannter Weise bei Temperaturen von 300 bis 500 °C mit Inertgas oder mittels des Desorptionsgases desorbiert werden kann.

Wenn man das Verfahren für die Reinigung von Rauchgas anwendet, empfiehlt es sich, das NO$_x$-haltige Gas mit einer Temperatur von 40 bis 80 °C und einer relativen Wasserdampfsättigung von 35 bis 90 % über das aktive Aluminiumoxid zu leiten.

Zweckmäßigerweise wird der beladene Aluminiumoxid-Katalysator in einer ersten Reduktionszone mit schwefelhaltigem Reduktionsgas bei Temperaturen von 100 bis 300 °C behandelt, wobei man Stickoxide und Nitrat-Ionen reduziert. Enthält das zu reinigende Gas, z. B. Rauchgas, neben NO$_x$ auch SO$_2$ und SO$_3$, so weist der beladene Katalysator auch Schwefelsäure auf. In der ersten Reduktionszone erzeugt die Behandlung mit schwefelhaltigem Reduktionsgas somit auch Elementarschwefel durch die Umsetzung von H$_2$SO$_4$ mit dem Reduktionsgas. Wenn der Katalysator einen solchen aus dem SO$_2$- und SO$_3$-Gehalt des zu reinigenden Gases stammenden Elementarschwefel-Gehalt aufweist, muß dieser Elementarschwefel-Anteil in einer Desorptionszone bei Temperaturen zwischen 300 und 500 °C entfernt werden. Nach der Desorptionszone oder, falls diese nicht erforderlich ist, nach der ersten Reduktionszone wird in einer zweiten Reduktionszone die restliche Elementarschwefel-Beladung des Aluminiumoxids mit Wasserstoff oder Kohlenwasserstoffen bei Temperaturen im Bereich von 400 bis 550 °C zum schwefelhaltigen Reduktionsgas umgesetzt. Das dabei gebildete Reduktionsgas wird der ersten Reduktionszone zugeführt ; schließlich kühlt man das Aluminiumoxid und verwendet es zum Entfernen von Stickoxiden wieder.

Überraschend wurde gefunden, daß sich das Verfahren zum Entfernen der Stickoxide auf einfache Weise zu einem Verfahren zum gleichzeitigen vollständigen Entfernen auch der Schwefeloxide (SO$_2$ und SO$_3$) erweitern läßt. Bei den zu behandelnden, Stickoxide und Schwefeloxide enthaltenden Gasen handelt es sich üblicherweise um Rauchgase, die auch noch Sauerstoff und Wasserdampf enthalten. Beim erweiterten Verfahren verwendet man einen kombinierten Katalysator, der im wesentlichen aus aktivem Aluminiumoxid und Aktivkohle besteht. Hierbei entfernt die Aktivkohle den Hauptteil des SO$_2$ und verbessert — vermutlich in einer gekoppelten chemischen Reaktion — die NO$_x$-Abscheidung. Die beiden Katalysatorkomponenten können in Strömungsrichtung des Gases getrennt hintereinander oder in mehreren Schichten abwechselnd angeordnet sein, oder man verwendet ein Gemisch aus aktivem Aluminiumoxid und Aktivkohle. Es ist auch möglich, mit Aluminiumoxid imprägnierte Aktivkohle einzusetzen.

2

Es bietet sich an, den kombinierten Katalysator in einem oder mehreren Festbetten oder Wanderbetten anzuordnen. Bei der Durchführung des Verfahrens leitet man das Gas, aus dem man die Stickoxide und Schwefeloxide entfernen will, mit einer Temperatur von 40 bis 80 °C und einer relativen Wasserdampfsättigung von 35 bis 90 % über den Katalysator. Hierbei belädt sich das aktive Aluminiumoxid hauptsächlich mit Stickstoffverbindungen und die Aktivkohle mit Schwefelsäure. Für das Verfahren ist es nun sehr vorteilhaft, daß die Regeneration des aktiven Aluminiumoxids und der Aktivkohle in einem gemeinsamen Regenerationsverfahren durchgeführt werden kann. Hierfür gibt man den beladenen kombinierten Katalysator in eine erste Reduktionszone, wo mit schwefelhaltigem Reduktionsgas bei Temperaturen von 100 bis 300 °C die Schwefelsäure zu Elementarschwefel und die adsorbierten Stickoxide und andere Stickstoff-Sauerstoff-Verbindungen zu Stickstoff reduziert werden. In einer nachgeschalteten Desorptionszone wird, falls dies nötig ist, bei Temperaturen von 300 bis 500 °C die aus $SO_2$ und $SO_3$ des behandelten Gases stammende Menge an Elementarschwefel mit Inertgas oder mit dem Reduktionsgas desorbiert. Anschließend wird in einer zweiten Reduktionszone die restliche Elementarschwefel-Beladung mit Wasserstoff oder Kohlenwasserstoffen bei Temperaturen von 400 bis 550 °C zum schwefelhaltigen Reduktionsgas umgesetzt. Das gebildete Reduktionsgas führt man der ersten Reduktionszone zu und kann den regenerierten kombinierten Katalysator nach Kühlung erneut zum Entfernen der Stickoxide und Schwefeloxide wiederverwenden.

Es empfiehlt sich, für das Verfahren ein aktives Aluminiumoxid mit einer Körnung von z. B. 2 bis 5 mm, einer Rütteldichte von 700 bis 800 g/l und einer BET-Oberfläche, bestimmt über die $N_2$-Isotherme bei —196 °C, von 250 bis 380 m²/g zu verwenden. Im Falle einer Imprägnierung werden etwa 3 bis 30 Gew.% $Al_2O_3$ mit einem Aluminiumsalz auf die Aktivkohle aufgebracht und mit $NH_3$ ausgefällt.

Ebenso wie das aktive Aluminiumoxid wird auch die verwendete Aktivkohle bei den chemischen Umsetzungen, die beim Regenergieren erfolgen, nicht verbraucht. Es empfiehlt sich deshalb der Einsatz einer Aktivkohle mit einer BET-Oberfläche von mindestens 1 000 m²/g, einem Mikroporenvolumen von 0,5 bis 0,7 cm³/g und einem Makroporenvolumen von 0,45 bis 0,60 cm³/g. Weitere Charakteristika bevorzugter Aktivkohlen sind folgende : Benzolbeladung bei 20 °C und einer relativen Sättigung von 90 % : 44 bis 52 Gew.-%, sowie bei relativer Sättigung von 10 % : 38 bis 44 Gew.-%. Die Rütteldichte der Aktivkohle kann im Bereich von etwa 350 bis 480 g/l liegen. Grundsätzlich ist körnige oder geformte Aktivkohle geeignet, wobei man die Korngröße, je nachdem, ob man mit Festbett, Wirbelbett oder z. B. mit Rutschbett arbeiten will, entsprechend wählt. Diese Auswahl wird vor allem auch den zulässigen Druckverlust bei der Gasbehandlung berücksichtigen. Für Festbett- und Rutschbett-Adsorber hat sich eine zylindrische Formkohle mit etwa 4 mm Durchmesser bewährt.

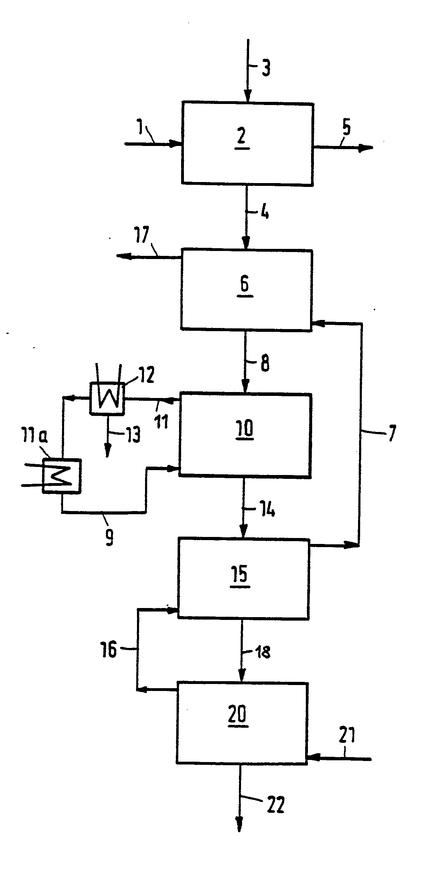

Die Zeichnung zeigt in schematischer Darstellung die Aufeinanderfolge der Verfahrensschritte bei einer Ausgestaltungsmöglichkeit des Verfahrens.

Das zu behandelnde Gas, z. B. Rauchgas aus einem Kraftwerk oder einer anderen Großfeuerungsanlage, tritt in der Leitung 1 in eine Reinigungszone 2 ein, die aktives Aluminiumoxid und Aktivkohle enthält. Frischer bzw. regenerierter Katalysator kommt aus der Leitung 3 und beladener Katalysator verläßt die Reinigungszone 2 durch die Leitung 4. Das behandelte Gas strömt in der Leitung 5 ab.

Der beladene Katalysator, bei dem es sich z. B. auch um ein Gemisch aus mit Stickstoffverbindungen beladenem aktivem Aluminiumoxid und mit Schwefelsäure beladener Aktivkohle handeln kann, gelangt zum Regenerieren zunächst in die erste Reduktionszone 6, der man durch die Leitung 7 schwefelhaltiges Reduktionsgas, z. B. $H_2S$, zuführt. Die Temperaturen in der ersten Reduktionszone 6 liegen üblicherweise im Bereich von 100 bis 300 °C, wobei aus Schwefelsäure Elementarschwefel und aus den Stickstoff-Verbindungen Stickstoff entsteht. Das in der Leitung 17 abziehende Gas kann über einen nicht dargestellten Gaserhitzer ganz oder teilweise im Kreislauf in die Reduktionszone 6 zurückgeführt werden.

Der Katalysator aus der ersten Reduktionszone 6 ist nunmehr bereits von seiner Stickoxid-Beladung befreit, enthält aber noch Schwefel und kann, wenn aus dem Gas kein $SO_2$ und $SO_3$ abgeschieden wurde, direkt der zweiten Reduktionszone 15 zugeführt werden. Ansonsten wird der schwefelhaltige Katalysator in der Leitung 8 zunächst der Desorptionszone 10 aufgegeben, in welcher mit Desorptionsgas, z. B. Stickstoff oder dem ohnedies vorhandenen schwefelhaltigen Reduktionsgas aus der Leitung 9, bei Temperaturen im Bereich von 300 bis 500 °C ein Teil der Schwefelbeladung desorbiert wird. Das in der Leitung 11 austretende Desorptionsgas leitet man durch den Kühler 12 und führt den auskondensierten Schwefel in der Leitung 13 ab. Das Desorptionsgas wird über den Erhitzer 11a in die Desorptionszone zurückgeführt. Der größere Teil der Schwefelbeladung bleibt auf dem Katalysator und dieser Schwefel enthaltende Katalysator wird in der Leitung 14 der zweiten Reduktionszone 15 zugeführt.

Zum Entfernen der restlichen Schwefelbeladung der Aktivkohle leitet man aus der Leitung 16 Wasserstoff oder auch Kohlenwasserstoffe in die zweite Reduktionszone 15 und setzt den Schwefel bei Temperaturen von 400 bis 550 °C zu schwefelhaltigem Reduktionsgas um, das in der Leitung 7 abzieht und der ersten Reduktionszone 6 zugeführt wird. Der schwefelfreie Katalysator gelangt in der Leitung 18 zur Kühlzone 20, wobei man zum Kühlen durch die Leitung 21 den in der Leitung 16 gebrauchten Wasserstoff bzw. die Kohlenwasserstoffe verwenden kann. Regenerierter Katalysator steht in der Leitung 22 zur Verfügung und kann in die Reinigungszone 2 zurückgeleitet werden.

Beispiele

3

## 0 174 036

Für die nachfolgenden Beispiele wird einheitlich folgende Laborapparatur verwendet :

Der Katalysator befindet sich in einem vertikalen Rohr von 5 cm Innendurchmesser, die Schichthöhe des Katalysators beträgt 40 cm, und das Rohr kann von außen auf Temperaturen zwischen 40 und 500 °C beheizt werden. Durch das Rohr leitet man von unten nach oben ein Modellrauchgas, das durch Mischen der Komponenten Luft, Stickstoff, $CO_2$, $SO_2$, $NO_x$ und Wasserdampf erhalten wird. Die Kontaktzeit des Gases mit dem Katalysator wird durch die Strömungsgeschwindigkeit eingestellt. Die Gaszusammensetzung ist bei allen Versuchen folgende :

| | |
|---|---|
| $O_2$ | 3 Vol.% |
| $CO_2$ | 14 Vol.% |
| $SO_2$ | 0,15 Vol.% |
| $NO_x$ | 1 000 ppm |
| Rest Stickstoff | |

Der Wasserdampftaupunkt des Modellrauchgases liegt bei 50 °C. Das $NO_x$ ist ein Gemisch aus 95 Vol.% NO und 5 Vol.% $NO_2$. Die Beladung des Katalysators erfolgt bei einer Temperatur von 65 °C. Das am oberen Ende des Rohres austretende behandelte Gas kann auf $SO_2$- und $NO_x$-Gehalt analysiert werden.

Zur Regeneration wird die Zufuhr von Modellrauchgas abgestellt und ein Regenerationsgas durch den beladenen Katalysator geleitet. Als Regenerationsgas dient bei allen Versuchen ein Gemisch aus 90 Vol.% Stickstoff und 10 Vol.% $H_2S$.

Das Regenerationsgas wird von oben nach unten durch den Katalysator geleitet und über einen Schwefelabscheider, einen Kühler, einen Wasserabscheider und eine Pumpe im Kreis geführt. Der Katalysator wird zunächst langsam bis auf 150 °C sodann weiter bis auf 400 °C hochgeheizt. Hierbei erfolgt zunächst die Umsetzung des $H_2S$ mit den chemisch-adsorptiv gebundenen Stickoxiden und mit der gegebenenfalls aus $SO_2$ gebildeten Schwefelsäure. Adsorbiertes Wasser und Reaktionswasser wird mit dem Regenerationsgas, das im Kreis geführt werden kann, ab 100 °C ausgetragen und auskondensiert. Zwischen 200 und 400 °C desorbiert der gebildete Schwefel. Schwefel und Wasser sammeln sich in den entsprechenden Abscheidern. Bei Temperaturen von etwa 400 bis 500 °C wird Wasserstoff durch den Katalysator geleitet, der aus dem nicht desorbierten Schwefel $H_2S$ bildet.

Diese Reaktionsstufen werden im Labor zeitlich nacheinander durchlaufen, was prinzipiell auch in der Technik möglich ist. Zweckmäßig arbeitet man aber großtechnisch mit bewegtem Katalysator und räumlich getrennter Gasreinigung und Regeneration des beladenen Katalysators. Hierbei arbeiten auch die einzelnen Reaktionsstufen im Regenerator gleichzeitig, aber räumlich getrennt.

### Beispiel 1

Gekörntes, kugelförmiges $Al_2O_3$ (Aktivtonerde der Firma Rhone Poulenc) mit einer Korngröße von 2 bis 5 mm, einer Rütteldichte von 770 g/l und innerer Oberfläche von 345 $m^2$/g wird in die oben beschriebene Apparatur eingefüllt und das Modellrauchgas bei einer Temperatur von 65 °C mit einer Kontaktzeit von 2 Sekunden durch das Reaktionsrohr geleitet. Am Gasausgang wird nur der $NO_x$-Gehalt gemessen. In den ersten 2 Stunden stellt man im austretenden Gas einen $NO_x$-Gehalt von 200 ppm fest, was einer $NO_x$-Abscheidung von 70 % entspricht. Im weiteren Versuchsverlauf geht der Abscheidegrad langsam zurück und beträgt nach 10 Stunden noch 50 %. Danach wird in der beschriebenen Weise regeneriert. Bei neuerlicher Beladung mit Modellrauchgas zeigt der Katalysator die gleiche Abscheideleistung wie beim ersten Versuch.

### Beispiel 2

Geformte Aktivkohle mit 4 mm Durchmesser, einer BET-Oberfläche von 1 250 $m^2$/g und einer Rütteldichte von 380 g/l wird mit saurer Aluminiumsulfatlösung imprägniert, sodann zur Ausfällung von $Al(OH)_3$ mit Ammoniak behandelt, mit Wasser neutral gewaschen, getrocknet und entwässert. Der so hergestellte Katalysator enthält 10 Gew.% $Al_2O_3$. Dieser Katalysator wird in die Versuchsapparatur eingefüllt und in gleicher Weise wie in Beispiel 1 mit Modellrauchgas getestet. Die Kontaktzeit beträgt 3 Sekunden, und das austretende Gas wird auf $SO_2$- und $NO_x$-Gehalt untersucht. Während einer Versuchszeit von 8 Stunden findet man kein $SO_2$ im austretenden Gas. Der $NO_x$-Gehalt beträgt anfangs 350 ppm, entsprechend 65 % Abscheidung, und steigt nach 8 Stunden bis auf 650 ppm, entsprechend einem Abscheidegrad von 35 %, an.

### Beispiel 3

Geformte Aktivkohle mit 4 mm Durchmesser, einer BET-Oberfläche von 1 250 $m^2$/g und einer Rütteldichte von 380 g/l wird mit Aluminiumoxid der Korngröße 2 bis 5 mm, einer Rütteldichte von 770 g/l und einer inneren Oberfläche von 340 $m^2$/g im Volumenverhältnis 1 : 1 gleichmäßig vermischt und in die beschriebene Versuchsapparatur eingefüllt. Der Test erfolgt wie in den Beispielen 1 und 2, wobei die

4

Kontaktzeit 3 Sekunden beträgt. Im austretenden Gas untersucht man den $SO_2$- und $NO_x$-Gehalt.

Über eine Versuchszeit von 9 Stunden findet man im austretenden Gas kein $SO_2$. Der Abscheidegrad für $NO_x$ beträgt in den ersten 2 Stunden 80 % und geht dann allmählich auf 50 % nach 9 Stunden Versuchszeit zurück. Nach Regeneration mit $H_2S$-haltigem Gas bei erhöhter Temperatur, Desorption des Schwefels und Wasserstoff-Behandlung bei 480 °C hat der Katalysator wieder die gleiche Abscheideleistung für $SO_2$ und $NO_x$ wie zu Beginn des Versuchs.

### Beispiel 4

Der im Beispiel 3 beschriebene Versuch wird mit der einzigen Ausnahme wiederholt, daß Aktivkohle und Aluminiumoxid nicht gleichmäßig vermischt sondern abwechselnd in Schichten von jeweils 4 cm Höhe übereinander eingefüllt werden. Der Versuch bringt dasselbe Ergebnis wie in Beispiel 3.

**Patentansprüche**

1. Verfahren zum Entfernen von Stickoxiden ($NO_x$) und ggf. Schwefeloxiden aus einem Gas, dadurch gekennzeichnet, daß man das Gas mit Temperaturen von 40 bis 120 °C über einen im wesentlichen aus aktivem Aluminiumoxid bestehenden Katalysator leitet, den beladenen Aluminiumoxid-Katalysator mit einem Reduktionsgas zum Entfernen adsorbierter Stickstoff-Verbindungen bei Temperaturen von 100 bis 300 °C behandelt und ggf. gebildeten Schwefel bei Temperaturen von 300 bis 500 °C mindestens teilweise desorbiert.

2. Verfahren nach Anspruch 1, dadurch gekennzeichnet, daß man das $NO_x$-haltige Gas mit einer Temperatur von 40 bis 80 °C und einer relativen Wasserdampfsättigung von 35 bis 90 % über den Aluminiumoxid-Katalysator leitet.

3. Verfahren nach Anspruch 1 oder 2, dadurch gekennzeichnet, daß man den beladenen Aluminiumoxid-Katalysator in einer ersten Reduktionszone mit schwefelhaltigem Reduktionsgas bei Temperaturen von 100 bis 300 °C behandelt und dabei die adsorbierten Stickoxide bzw. Stickstoff-Sauerstoff-Verbindungen reduziert, in einer Desorptionszone bei Temperaturen zwischen 300 und 500 °C einen Teil des gebildeten Elementarschwefels desorbiert und anschließend in einer zweiten Reduktionszone die restliche Elementarschwefel-Beladung des Aluminiumoxid-Katalysators mit Wasserstoff oder Kohlenwasserstoffen bei Temperaturen im Bereich von 400 bis 550 °C zum schwefelhaltigen Reduktionsgas umsetzt und das gebildete Reduktionsgas der ersten Reduktionszone zuführt, dann den Aluminiumoxid-Katalysator kühlt und zum Entfernen von Stickoxiden wiederverwendet.

4. Verfahren zum gleichzeitigen Entfernen von Stickoxiden ($NO_x$) und Schwefeloxiden ($SO_2$ und $SO_3$) aus Sauerstoff und Wasserdampf enthaltendem Gas, dadurch gekennzeichnet, daß man das Gas, das eine Temperatur von 40 bis 80 °C und eine relative Wasserdampfsättigung von 35 bis 90 % aufweist, über einen kombinierten Katalysator leitet, der im wesentlichen aus aktivem Aluminiumoxid und Aktivkohle besteht, den beladenen Katalysator in einer ersten Reduktionszone mit schwefelhaltigem Reduktionsgas bei Temperaturen von 100 bis 300 °C behandelt und dabei Schwefelsäure zu Elementarschwefel und die adsorbierten Stickoxide und andere Stickstoff-Sauerstoffverbindungen zu Stickstoff reduziert, in einer Desorptionszone bei Temperaturen von 300 bis 500 °C die Elementarschwefel-Beladung mit einem Desorptionsgas teilweise entfernt, anschließend in einer zweiten Reduktionszone die restliche Elementarschwefel-Beladung mit Wasserstoff oder Kohlenwasserstoffen bei Temperaturen von 400 bis 550 °C zu schwefelhaltigem Reduktionsgas umsetzt und das gebildete Reduktionsgas der ersten Reduktionszone zuführt, und daß man den Katalysator kühlt und zum Entfernen von Stickoxiden und Schwefeloxiden wiederverwendet.

5. Verfahren nach Anspruch 4, dadurch gekennzeichnet, daß als kombinierter Katalysator ein Gemisch aus körnigem aktivem Aluminiumoxid und körniger Aktivkohle verwendet wird.

6. Verfahren nach Anpruch 4 oder 5, dadurch gekennzeichnet, daß der kombinierte Katalysator in mindestens zwei abwechselnden Schichten von körniger Aktivkohle und körnigem aktivem Aluminiumoxid angeordnet ist.

7. Verfahren nach Anspruch 4, dadurch gekennzeichnet, daß als kombinierter Katalysator eine mit Aluminiumoxid imprägnierte Aktivkohle verwendet wird.

**Claims**

1. A process of removing nitrogen oxides ($NO_x$) and of optionally removing sulphur oxides from a gas, characterized in that the gas is passed at temperatures from 40 to 120 °C over a catalyst which consists substantially of activated alumina, the laden alumina catalyst is treated with a reducing gas at temperatures from 100 to 300 °C to remove adsorbed nitrogen compounds, and any sulphur which has been formed is desorbed at least in part at temperatures from 300 to 500 °C.

2. A process according to claim 1, characterized in that the $NO_x$-containing gas is at a temperature from 40 to 80 °C and has a relative water vapour saturation from 35 to 90 % as it is passed over the alumina catalyst.

3. A process according to claim 1 or 2, characterized in that the laden alumina catalyst is treated in a first reducing zone with a sulphur-containing reducing gas at temperatures from 100 to 300 °C to reduce the absorbed nitrogen oxides and nitrogen-oxygen compounds, part of the elementary sulphur which has been formed is desorbed in a desorption zone at temperatures between 300 and 500 °C, the remaining elementary sulphur loading of the alumina catalyst is subsequently reacted in a second reducing zone with hydrogen or hydrocarbons at temperatures in the range from 400 to 550 °C to from the sulphur-containing reducing gas and the resulting reducing gas is fed to the first reduction zone, whereafter the alumina catalyst is cooled and is re-used to remove nitrogen oxides.

4. A process of simultaneously removing nitrogen oxides ($NO_x$) and sulphur oxides ($SO_2$ and $SO_3$) from a gas which contains oxygen and water vapour, characterized in that the gas which is at a temperature from 40 to 80 °C and has a relative water vapour saturation from 35 to 90 % is passed over a combined catalyst, which substantially consists of activated alumina and activated carbon, the laden catalyst is treated in a first reduction zone with a sulphur-containing reducing gas at temperatures from 100 to 300 °C so that sulphuric acid is reduced to elementary sulphur and the adsorbed nitrogen oxides and other nitrogen-oxygen compounds are reduced to nitrogen, the elementary sulphur loading is partly removed by a treatment with a desorbing gas at temperatures from 300 to 500 °C in a desorption zone, the remaining elementary sulphur loading is subsequently reacted in a second reduction zone with hydrogen or hydrocarbons at temperatures from 400 to 550 °C to form a sulphur-containing reducing gas, the resulting reducing gas is fed to the first reduction zone and the catalyst is cooled and is re-used to remove nitrogen oxides and sulphur oxides.

5. A process according to claim 4, characterized in that a mixture of granular active alumina and granular activated carbon is used as combined catalyst.

6. A process according to claim 4 or 5, characterized in that the combined catalyst is arranged in at least two alternating layers of granular activated carbon and granular active alumina.

7. A process according to claim 4, characterized in that an activated carbon that is impregnated with alumina is used as combined catalyst.

**Revendications**

1. Procédé pour éliminer d'un gaz des oxydes d'azote ($NO_x$) et, le cas échéant, des oxydes de soufre, caractérisé en ce qu'il consiste à envoyer le gaz, à des températures de 40 à 120 °C, sur un catalyseur constitué essentiellement d'oxyde d'aluminium actif, à traiter, à des températures de 100 à 300 °C, le catalyseur en oxyde d'aluminium chargé, par un gaz réducteur pour éliminer les composés azotés adsorbés, et à désorber au moins partiellement, à des températures de 300 à 500 °C, le soufre formé éventuellement.

2. Procédé suivant la revendication 1, caractérisé en ce qu'il consiste à envoyer le gaz contenant $NO_x$, à une température de 40 à 80 °C et sous une saturation relative de vapeur d'eau de 35 à 90 °C, sur le catalyseur en oxyde d'aluminium.

3. Procédé suivant la revendication 1 ou 2, caractérisé en ce qu'il consiste à traiter, à des températures de 100 à 300 °C, le catalyseur en oxyde d'aluminium chargé dans une première zone de réduction par du gaz réducteur soufré, et à réduire les oxydes d'azote adsorbés et les composés azotés et oxygénés, à désorber, dans une zone de désorption à des températures comprises entre 300 et 500 °C, une partie du soufre élémentaire formé et, ensuite, à transformer dans une seconde zone de réduction, la charge résiduelle en soufre élémentaire du catalyseur en oxyde d'aluminium, par de l'hydrogène ou par des hydrocarbures, à des températures comprises entre 400 et 550 °C, en gaz réducteur soufré, et à envoyer le gaz réducteur formé à la première zone de réduction, puis à refroidir le catalyseur en oxyde d'aluminium et à le réutiliser pour éliminer des oxydes d'azote.

4. Procédé pour éliminer simultanément des oxydes d'azote ($NO_x$) et des oxydes de soufre ($SO_2$ et $SO_3$) d'un gaz contenant de l'oxygène et de la vapeur d'eau, caractérisé en ce qu'il consiste à envoyer le gaz, qui a une température de 40 à 80 °C et une saturation relative de vapeur d'eau de 35 à 90 %, sur un catalyseur combiné constitué essentiellement d'oxyde d'aluminium actif et de charbon actif, à traiter, à des températures de 100 à 300 °C, le catalyseur chargé dans une première zone de réduction, par du gaz réducteur soufré, et à réduire ainsi l'acide sulfurique en soufre élémentaire et les oxydes d'azote adsorbés et d'autres composés azotés et oxygénés en azote, à éliminer en partie, dans une zone de désorption à des températures de 300 à 500 °C, la charge en soufre élémentaire par un gaz de désorption, ensuite à transformer dans une seconde zone de réduction, la charge restante de soufre élémentaire par de l'hydrogène ou par des hydrocarbures, à des températures de 400 à 500 °C, en gaz réducteur soufré, et à envoyer le gaz réducteur formé à la première zone de réduction et à refroidir le catalyseur et à le réutiliser pour éliminer des oxydes d'azote et des oxydes de soufre.

5. Procédé suivant la revendication 4, caractérisé en ce qu'il consiste à utiliser, comme catalyseur combiné, un mélange d'oxyde d'aluminium actif en grains et de charbon actif en grains.

6. Procédé suivant la revendication 4 ou 5, caractérisé en ce que le catalyseur combiné est disposé en au moins deux couches alternées de charbon actif en grains et d'oxyde d'aluminium actif en grains.

7. Procédé suivant la revendication 4, caractérisé en ce qu'il consiste à utiliser, comme catalyseur combiné, du charbon actif imprégné d'oxyde d'aluminium.